# EUROPEAN PATENT APPLICATION

(11) **EP 2 639 767 A1**
(43) Date of publication of application: **18.09.2013**
(21) Application number: 12159093.9
(22) Date of filing: 12.03.2012
(51) Int. Cl.: G06T 7/20

(54) **A method of interrelating shared object information in multiple images, an image processing system and a computer program product**

(71) Applicant: Nederlandse Organisatie voor Toegepast -Natuurwetenschappelijk Onderzoek TNO, 2628 VK Delft (NL)
(72) Inventor: van Eekeren, Adam Wilhelmus Maria, 2628 VK Delft (NL); den Hollander, Richard Jacobus Maria, 2628 VK Delft (NL); Schutte, Klamer, 2628 VK Delft (NL); Dijk, Judith, 2628 VK Delft (NL)
(74) Representative: Jansen, Cornelis Marinus

(57) **Abstract**

The invention relates to a method of interrelating shared object information in multiple images. The method comprises a step of defining a multiple number of patches in a first image. The method also comprises the step of constructing a multiple number of local motion estimators for mapping a corresponding patch from the first image to a second image. Further, the method includes the step of calculating a single global motion estimator based on the multiple number of local motion estimators.

## Description

The present invention relates to a method of interrelating shared object information in multiple images.

Methods of interrelating shared object information in multiple images are e.g. known for estimating a motion of a multiple camera system in a three-dimensional (3D) space, wherein the field of view of multiple cameras at least partially coincide. Further, such methods can be used for generating so-called super-resolution images.

A generally known method of interrelating shared object information in multiple images is based on a so-called Scale Invariant Feature Transform (SIFT) algorithm. Here, local features in images can be detected and described. It appears however, that such a SIFT approach is limited in terms of applicability and preciseness.

It is an object of the invention to provide an improved method of interrelating shared object information in multiple images. Thereto, according to the invention, the method comprises the steps of defining a multiple number of patches in a first image, constructing a multiple number of local motion estimators for mapping a corresponding patch from the first image to a second image, and calculating a single global motion estimator based on the multiple number of local motion estimators.

By constructing local motion estimators mapping from individual patches in a first image to a second image, and by calculating a single global motion estimator based on these local motion estimators, the method can be more precise than conventional methods such as the SIFT approach. As an example, the method according to the invention may lead to sub-pixel preciseness, while a SIFT approach may lead to pixel preciseness. Further, the method according to the invention is more flexible in use. As an example, the method according to the invention can also be used on image data containing symmetric structures such as circles and lines, where conventional methods such as the SIFT approach are not discriminative and fail.

The invention also relates to an image processing system.

Further, the invention relates to a computer program product. A computer program product may comprise a set of computer executable instructions stored on a data carrier, such as a CD or a DVD. The set of computer executable instructions, which allow a programmable computer to carry out the method as defined above, may also be available for downloading from a remote server, for example via the Internet.

Other advantageous embodiments according to the invention are described in the following claims.

By way of example only, embodiments of the present invention will now be described with reference to the accompanying figures in which
Fig. 1 shows a first set of images;
Fig. 2 shows a second set of images;
Fig. 3 shows a third set of images;
Fig. 4 shows a schematic view of an image processing system according to the invention; and
Fig. 5 shows a flowchart of an embodiment of a method according to the invention.

It is noted that the figures show merely a preferred embodiment according to the invention. In the figures, the same reference numbers refer to equal or corresponding parts.

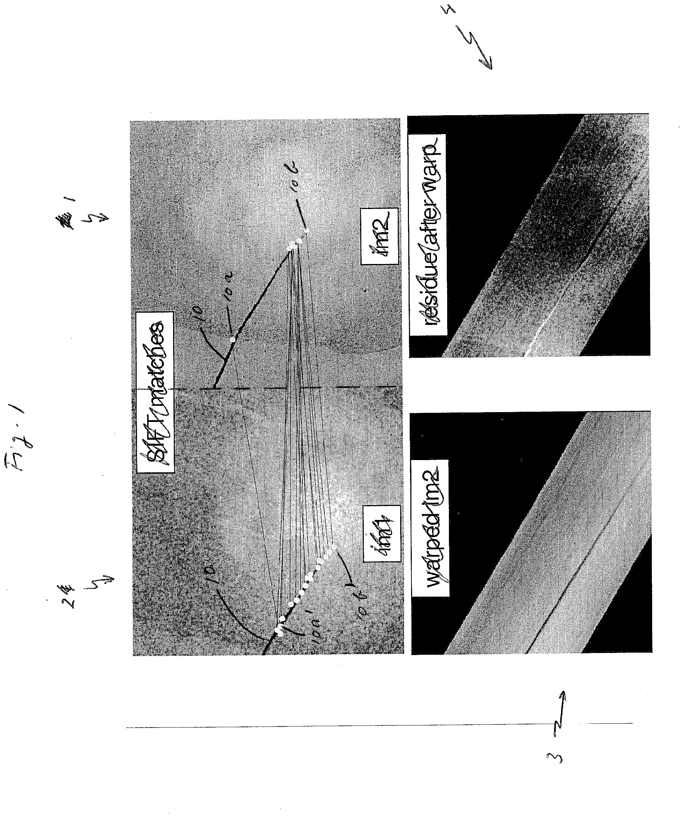

Figure 1 shows a first set of images. The top part of Fig. 1 shows on the right hand side a first image 1, and on the left hand side a second image 2. Both images 1,2 show a line-shaped object 10. For the purpose of automatically comparing information of shared objects in images, image data of the first and second image 1,2 can be processed. The information of the object 10 in the first and the second image 1, 2 is not necessarily the same since the view on the object can differ, e.g. in terms of scale and/or viewing angle / position.

Using a so-called Scale Invariant Feature Transform (SIFT) algorithm, local features in images can be detected and described. Here, a local rotation and translation is performed to map object parts 10a,b in the first image 1 to corresponding object parts 10a',b' in the second image 2.

The bottom part of Fig. 1 shows on the left hand side the result image 3 when the first image 1 is mapped using the SIFT algorithm. The bottom part on the right hand side shows a residue image 4 that results when the second image 2 is subtracted from the result image 3.

Generally, the quality of the mapping algorithm has a correlation with noise in the residue image. When the mapping algorithm results in a good match of the objects in both images, the pixels in the residue image are mainly stochastic. On the other hand, if the residue image shows deterministic structures, the quality of the mapping is typically low.

Clearly, the result of the SIFT algorithm in this particular example is poor. This is visible both from the mapped image 3 on the bottom left hand side, as well as from the residue image 4 on the bottom right hand side.

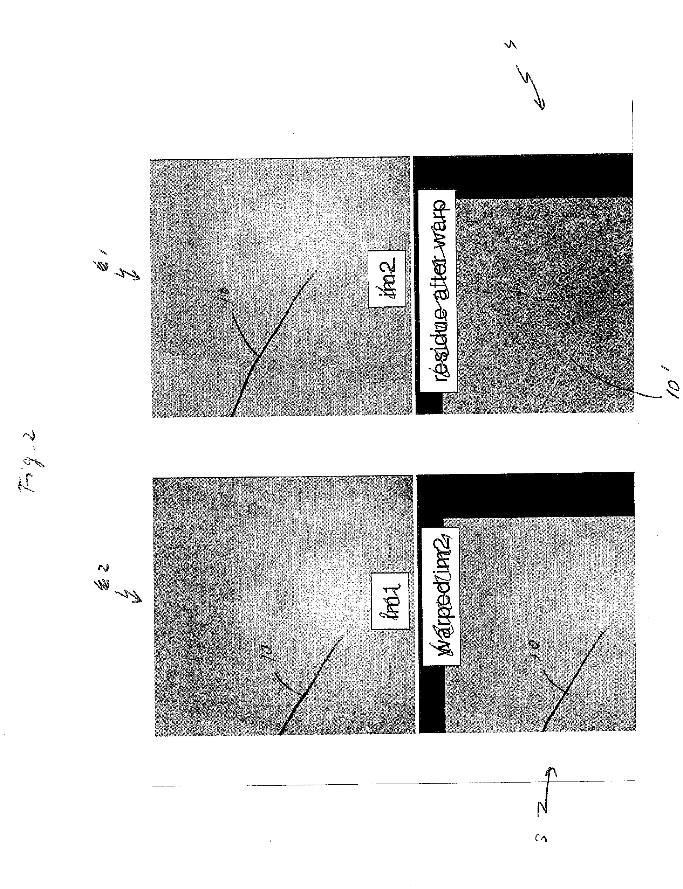

Figure 2 shows a second set of images. Again, the top part of Fig. 2 shows on the right hand side the first image 1, and on the left hand side the second image 2. Now, the bottom part of Fig. 2 shows on the left hand side a result image 3 when the first image 1 is mapped using a global gradient shift estimator. Similarly, the bottom part of Fig. 2 shows on the right hand side a residue image 4 that results when the second image 2 is subtracted from the result image 3.

The residue image 4 includes the residue object 10'. The other pixel information is much more noisy than in Fig. 1, illustrating that the global gradient shift estimator has a better result in this particular image example than the mapping based on the SIFT approach.

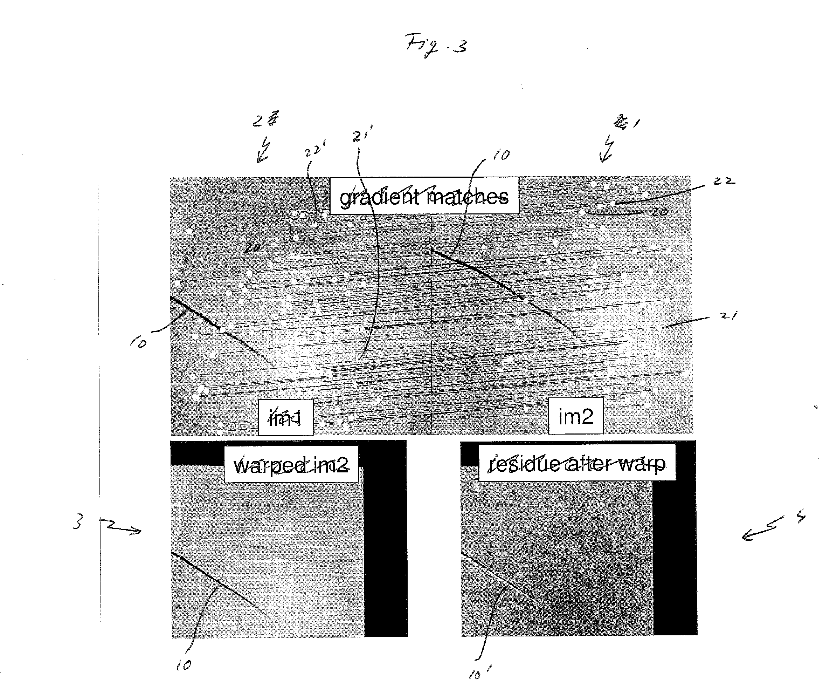

Figure 3 shows a third set of images. The first image 1 and the second image 2 on the right hand side and on the left hand side, respectively, of the top part in Fig. 3 are the same as the first and second image 1, 2 in Figs. 1 and 2. In an analogous manner, the left hand side of the bottom part in Fig. 3 shows a result image 3 when the first image 1 is mapped using a method according to an aspect of the invention. Then, the right hand side of the bottom part in Fig. 3 shows a residue image 4 resulting from the operation of subtracting the second image 2 from the result image 3.

According to an aspect of the invention, the above-mentioned method interrelates information of a single or a multiple number of objects in multiple images, by performing a number of steps. The steps include a step of defining a multiple number of patches 20, 21, 22, in the first image 1. The steps also include a step of constructing a multiple number of local motion estimators for mapping a corresponding patch 20, 21, 22 from the first image 1 to the second image 2. The original patches 20, 21, 22 in the first image 1 are thus mapped to a target patch 20', 21', 22' in the second image 2, via the corresponding local motion estimator. Further, the steps include a step of calculating a single global motion estimator based on the multiple number of local motion estimators.

Preferably, an image part in the first image 1 containing a view of the object(s) 10 that is shared with the second image 2, is entirely divided into the multiple number of patches, thereby optimally exploiting information that can be interrelated between the first and second image 1, 2. The multiple number of patches 20, 21, 22 may form a part of the first image 1 displaying the shared object(s). Alternatively, the multiple number of patches may display the shared objects partially.

It is noted in this context that the patches can be defined independently of a specific grid. Further, the scale of the patches can be chosen at a desired level, e.g. depending on specific information that can be retrieved from the data. Advantageously, the scale of the patches is larger than a single pixel or a small group of pixels. As an example, the scale of the patches is on a level between individual pixel and the scale level of the entire image. By selecting an appropriate intermediate scale level, the method can be both efficient and effective, since the number of local motion estimators is relatively moderate, while, on the other hand, a combined local / global approach is applied.

The local motion estimators each include a gradient shift estimator. More generally, shift estimators could be applied. The local motion estimator may include mapping information in terms of translation and, optionally, rotation. In an alternative embodiment, a block matching algorithm is applied in the local motion estimators.

Further, the single global motion estimator includes a so-called Random Sampling Consensus (RANSAC) algorithm, for filtering out local motion estimators that re associated with outliers. The RANSAC algorithm estimates a pre-defined motion model based on the locations of image patch pairs 20, 20'; 21, 21'; 22, 22', preferably all locations of all image patch pairs. Apparently, also other positive correlation tests can be applied to remove outliers, such as algorithms based weighting individual estimators.

Sources of outlier landmarks range from sensor noise and correspondences errors to independent moving objects such as cars or people that are visible in images. Similarly, inlier motion samples are associated with objects that remain stationary over a multiple number of images.

In the past decade RANSAC emerged as a standard for robust parameter estimation in computer vision. The RANSAC method is disclosed in the paper "Random sample consensus: a paradigm for model fitting with applications to image analysis and automated cartography" by M. A. Fischler and R. C. Bolles, Communications of the ACM, vol. 24, no. 6, pp. 381 - 395, June 1981.

Hence, the RANSAC method is used in many visual odometry systems. The idea is to take a number of minimal set (containing for example 6 landmarks) motion estimates, e.g. a fast estimation, and score them on how well they align with all the landmarks. Based on the best scoring minimal set motion estimate the inlier landmarks can be obtained. Often, refinement of the initial RANSAC estimate based on the found inlier landmarks is performed. Since the paper by Fischler and Bolles, many different RANSAC approaches have emerged. Most notably, for the case of visual odometry, is pre-emptive RANSAC, disclosed in a paper by D. Nistr in 2005, which allows evaluating a larger number of minimal set motion estimates in the same amount of time. Also, using some sort of multi-frame optimization or multi-frame landmark tracking is frequently used. In an extreme case, this leads to simultaneous localization and mapping approaches.

Related to ego-motion estimation is the problem of pose estimation which involves estimating a motion of an object from images taken by a fixed camera or by a number of fixed cameras. Recently, other approaches instead of RANSAC have emerged for robust pose estimation. Most of these methods use statistics or parameter estimation of some sort together with Riemannian geometry or Lie algebra to obtain a robust estimate. These approaches are inspired by research into the geometry of robotics.

Further, the step of constructing a multiple number of local motion estimators and the step of calculating a single global motion estimator can be performed iteratively to convergence to a stable and accurate global motion estimator. The iterative process preferably includes a step of evaluating a residue resulting from subtracting the second image from the global motion estimator applied to the first image, i.e. the information as shown on the right hand side of the bottom part in Fig. 3. The residue can be used as input information for constructing new local motion estimators.

The iterative process can be terminated when a convergence criterion is met or when the residue is below a predefined threshold value. In this respect it is noted that, in another approach, the steps of constructing local motion estimators and calculating a single global estimator can be performed only once, thereby achieving a fast scheme.

It is further noted that the step of evaluating the residue can not merely be used for driving an iterative process, but also for monitoring a quality of the process of interrelating shared objection information in multiple images.

The residue image 4 on the right hand side of the bottom part of Fig. 3 shows the residue object 10', similar to the residue image 4 in Fig. 2. Further, the other pixel information includes mainly noisy signals indicating a good interrelation of shared object information in the first and second image 1, 2. A minimum level of noise in the residue image can be estimated from noise that is present in the first and the second image 1, 2. As an example, assuming that the noise is present in a normal distribution, the squared variation of the residue is greater or equal to the sum of the squared variations in the first and second image, respectively.

It has been found that in this context iterative schemes may result in a very accurate registration. It has also been found that the application of local shift estimators to images containing complex motion models sometimes leads to a wrong local shift estimate construction. However, since a multiple number of local motion estimators are combined in a single global motion estimator, a stable scheme is generally achieved. Further, when including an iterative process for the construction of the local and global estimators, it appears that a very precise registration can be obtained.

In the above-described scheme, the method is illustrated referring to a first image and a second image. Apparently, object information in more than two images can also be shared, e.g. for following an object motion in a sequence of images. As an example, a first global motion estimator can be calculated for mapping from a first image to a second image, while a second global motion estimator can be calculated for mapping from a first image to a third image. Otherwise, a second global motion estimator can be calculated for mapping from a second image to a third image, and so on.

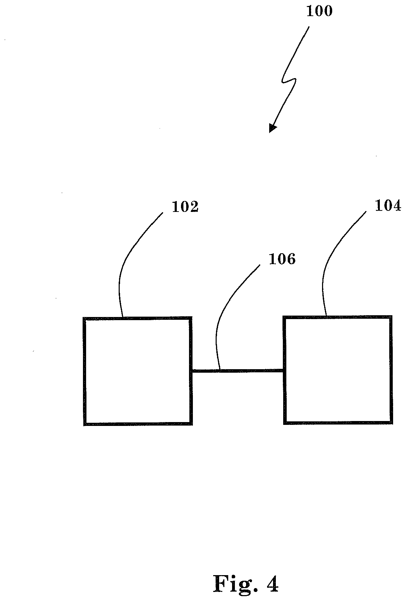

Figure 4 shows a schematic view of an image processing system 100 according to the invention. The system 100 includes a processor 102 and a memory 104 connected to the processor 102 via a data line 106. The processor 102 is arranged for performing the steps of defining a multiple number of patches in a first image, constructing a multiple number of local motion estimators for mapping a corresponding patch from the first image to a second image, and calculating a single global motion estimator based on the multiple number of local motion estimators.

The first and the second image, and optionally further images, are stored on the memory 104. For the purpose of processing the images, image data is sent from the memory 104 to the processor 102. The memory 104 is either placed locally, near to the processor 102, e.g. for forming an integral unit, or offset, accessible via a remote connection, such as the Internet. The image data can also be provided from a multiple number of memories. Further, in principle, image data can also be provided directly from a single or a multiple number of image recording device(s).

The image processing system 100 can be used for different applications, ranging from registering a moving object, e.g. for robotic mapping and navigation, to image stitching, 3D modelling, gesture recognition, video tracking, image stabilization, match moving (insertion of computer graphics into live-action footage, e.g. for cinematography) and construction of super-resolution images. Applications may be found in the field of security, defence, consumer electronics, medical and microscopy.

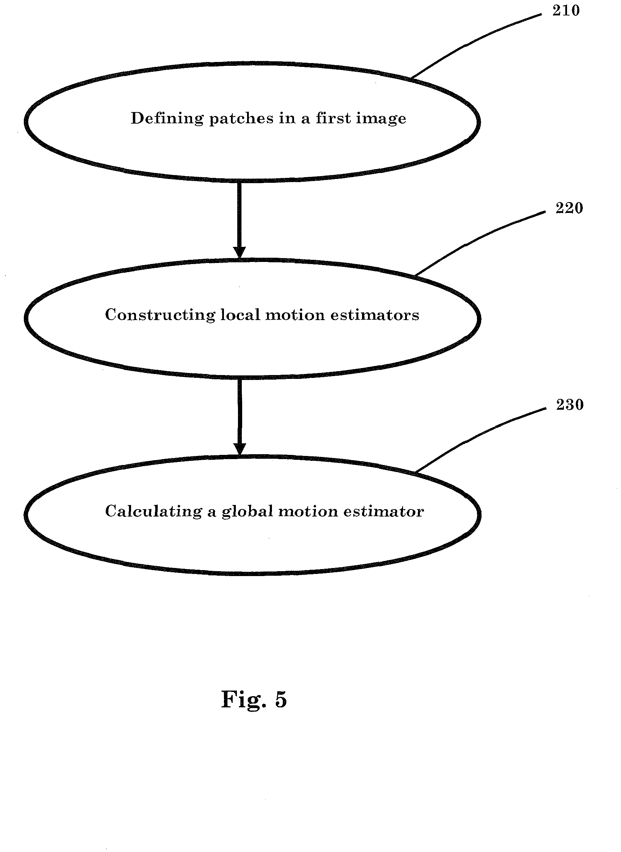

Figure 5 shows a flow chart of an embodiment of a method according to the invention. The method comprises the steps of defining (210) a multiple number of patches in a first image, constructing (220) a multiple number of local motion estimators for mapping a corresponding patch from the first image to a second image, and calculating (230) a single global motion estimator based on the multiple number of local motion estimators.

The method of interrelating shared object information can be performed using dedicated hardware structures, such as FPGA and/or ASIC components. Otherwise, the method can also at least partially be performed using a computer program product comprising instructions for causing a processor of the computer system to perform the above described steps of the method according to the invention.

It will be understood that the above described embodiments of the invention are exemplary only and that other embodiments are possible without departing from the scope of the present invention. It will be understood that many variants are possible.

The invention can be applied to interrelate shared object information associated with a single object. Otherwise, also information of multiple shared objections can be interrelated.

Such variants will be apparent for the person skilled in the art and are considered to fall within the scope of the invention as defined in the following claims.

## Claims

1. A method of interrelating shared object information in multiple images, comprising the steps of:
- defining a multiple number of patches in a first image;
- constructing a multiple number of local motion estimators for mapping a corresponding patch from the first image to a second image; and
- calculating a single global motion estimator based on the multiple number of local motion estimators.

2. A method according to claim 1, wherein the calculating step includes filtering out local motion estimators associated with outliers.

3. A method according to claim 1 or 2, wherein the calculating step includes using a RANSAC algorithm.

4. A method according to any of the preceding claims, further comprising a step of evaluating a residue resulting from subtracting the second image from the global motion estimator applied to the first image.

5. A method according to claim 4, wherein the constructing step and the calculating step are applied iteratively depending on the outcome of the residue evaluation.

6. A method according to claim 5, wherein the iterative process is ended when a convergence criterion is met or when the residue is below a pre-defined threshold value.

7. A method according to any of the preceding claims, wherein a local motion estimator includes a shift estimator.

8. A method according to any of the preceding claims, wherein a local motion estimator includes a gradient shift estimator.

9. A method according to any of the preceding claims, wherein the constructing step and the calculating step are also applied for mapping the corresponding patches to a third image.

10. A method according to any of the preceding claims, wherein the multiple number of patches form a part of the first image displaying the shared object.

11. A method according to any of the preceding claims, wherein the global motion estimator is used for registering a moving object or for generating a super-resolution image.

12. An image processing system for interrelating shared object information in multiple images, comprising a processor that is arranged for performing the steps of:
- defining a multiple number of patches in a first image;
- constructing a multiple number of local motion estimators for mapping a corresponding patch from the first image to a second image; and
- calculating a single global motion estimator based on the multiple number of local motion estimators.

13. A computer program product for interrelating shared object information in multiple images, the computer program product comprising computer readable code for causing a processor to perform the steps of:
- defining a multiple number of patches in a first image;
- constructing a multiple number of local motion estimators for mapping a corresponding patch from the first image to a second image; and
- calculating a single global motion estimator based on the multiple number of local motion estimators.
